# EUROPÄISCHE PATENTSCHRIFT

(11) **EP 2 832 800 B1**
(45) Veröffentlichungstag und Bekanntmachung des Hinweises auf die Patenterteilung: **21.09.2016**
(21) Anmeldenummer: 13197309.1
(22) Anmeldetag: 15.12.2013
(51) Int. Cl.: C09B 67/22, C09B 67/42, C09B 61/00

(54) **Feste Farbstoffzubereitungen**
Solid colour compositions
Compositions de couleurs solides

(30) Priorität: 01.08.2013 DE 202013006887 U
(43) Veröffentlichungstag der Anmeldung: 04.02.2015
(73) Patentinhaber: Symrise AG, 37603 Holzminden (DE)
(72) Erfinder: Münstermann, Marek, 37639 Bevern (DE); Zillmann, Olaf, 37603 Holzminden (DE)
(74) Vertreter: Fabry, Bernd

(56) Entgegenhaltungen:
- EP-A2- 0 024 655
- WO-A1-2007/009601
- CH-A- 490 467
- DE-A1- 2 034 542
- GB-A- 652 915
- DATABASE WPI Week 200003 Thomson Scientific, London, GB; AN 2000-033716 XP002732963, & JP H11 302556 A (HOYU KK) 2. November 1999 (1999-11-02)
- DATABASE EPODOC [Online] EUROPEAN PATENT OFFICE, THE HAGUE, NL; XP002732967, Database accession no. KR-20120003160-A & KR 2013 0082001 A (CHEONG WA ENGINEERING & CONSTRUCTION CO LTD [KR]; KWANG YANG CONSTRUCT) 18. Juli 2013 (2013-07-18)

## Beschreibung

### GEBIET DER ERFINDUNG

Die Erfindung befindet sich auf dem Gebiet Farbstoffzubereitungen und betrifft spezielle Pulver insbesondere für den Einsatz bei so genannten "HOLI-Festivals".

### STAND DER TECHNIK

Holi (Hindi, f., 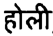 holi) das möglicherweise eines der ältesten Feste überhaupt ist, stellt aber sicher das farbenfreudigste von allen dar. Fünf Tage nach Vollmond ist *Ranga-pancami* (Ranga = Farbe; Pancami = der 5. lunare Tag), der zweite Tag des Festes. An diesem Tag werden auch im sehr traditionsbewussten Indien alle Schranken von Kaste, Geschlecht, Alter und gesellschaftlichem Status aufgehoben. Es wird ausgelassen gefeiert und man besprengt und bestreut sich gegenseitig mit gefärbtem Wasser und gefärbtem Puder, dem *Gulal.* Wer den Übermut ablehnt, bestreicht sich gegenseitig zumindest dezent mit etwas Pulverfarbe. Trotz aller Veränderungen in der modernen indischen Gesellschaft ist die sakrale Bedeutung weiterhin deutlich erkennbar, so werden etwa die Farben noch heute meist vorher auf dem Altar geweiht und die Menschen überbringen Segenswünsche. Ursprünglich entstanden die Farbpulver aus bestimmten Blüten, Wurzeln und Kräutern, die heilend wirken. Heute kommen häufig synthetische Farben zum Einsatz, die teilweise sogar schädlich sein können.

Am ersten Tag entzündet man in der Nacht ein Feuer und verbrennt darin eine Figur aus Stroh, die so genannte Holika. Verschiedene Mythen beschäftigen sich mit dieser Dämonin; eine der bekanntesten Geschichten erzählt:

*Der kindliche Prinz Prahlada sollte von seinem Vater überredet werden, ihm alle göttliche Ehre zu erweisen, der Junge jedoch verehrte weiterhin nur Vishnu. Mit verschiedenen Mitteln versuchte nun der König seinen Sohn zu töten, jedesmal jedoch griff Vishnu selbst ein und rettete das Kind. Schließlich griff der König zu einer List: Seine Schwester Holika, die durch besondere Kräfte vor dem Feuer geschützt war, sollte mit Prahlada auf dem Schoß ins Feuer springen und ihn so verbrennen. Aber die Flammen verschonten das Kind und von Holika blieb nur ein Häufchen Asche.*

Danach feiern die Menschen als Erinnerung an die Vernichtung der Dämonin das Fest Holi. Eng mit Holi verbunden sind die Geschichten aus Kindheit und Jugend Krishnas. Auch er soll mit seiner Gefährtin Radha und den anderen Hirtinnen das Spiel der Farben zelebriert haben. Hier interpretieren Hindus das zärtliche "Spiel" mit den Farben als "Lila" Krishnas, als Symbol für das "Göttliche Spiel".

Ein dem Holi sehr ähnliches Fest, Nouruz, feiert man im iranischen Kulturkreis.

Wie alle Feste ist auch Holi in seiner Bedeutung sehr vielschichtig. Im spirituellen Bereich vermittelt es, wie in der dazugehörenden Mythologie erkennbar, die Botschaft vom Triumph des Guten über das Böse. In der Natur dagegen markiert es den Sieg des Frühlings über den Winter, denn das Fest beginnt mit dem Aufblühen der Natur. Ein wichtiger Punkt ist den Menschen auch der Versöhnungsaspekt, denn es heißt, dass man in diesen Tagen auch alte Streitigkeiten begraben soll. Häufig ist es üblich, zu Holi ein Bhang genanntes Rauschmittel zu konsumieren. So mancher trinkt auch den traditionell verpönten Alkohol, was sich besonders in den Städten durch die daraus entstehende Gewalt immer mehr zu einem Problem entwickelt.

Inzwischen wird Holi in verschiedenen Teilen der Welt zu kommerziellen, partyähnlichen Events adaptiert - so z. B. beim Holi Festival of Colours, das 2012 als erste kommerzielle Veranstaltung dieser Art in Deutschland seinen Auftakt in Berlin hatte. Bei diesen Anlässen feiern überwiegend junge Leute ausgelassen und bewerfen sich mit Farbpulvern - den eingangs beschriebenen Gulals - die hier als "Holipulver" oder "Mikrokonfetti" bezeichnet werden.

Bei diesen Pulver handelt es sich chemisch betrachtet um nichts anderes als feste Farbstoffzubereitungen, die nur dann in Verkehr gebracht werden dürfen, wenn sie zahlreichen Bestimmungen, angefangen vom Chemikaliengesetz über die GefahrstoffVO, die KosmetikVO bis hin zur FeinstaubVO, genüge leisten.

Tatsächlich sind die Gefahren, die von solchen Pulvern ausgehen können, nicht unerheblich. Das beginnt mit der dermatologischen Verträglichkeit, denn die Stoffe werden mit der Haut und nicht selten auch den Schleimhäuten in Kontakt gebracht und können je nach Feinstaubanteil auch über die Lunge aufgenommen werden. Ein weiteres Problem besteht darin, dass feinteilige Zubereitungen zu Staubexplosionen neigen, was bei der vorgesehenen Anwendung definitiv ausgeschlossen sein muss. Da Farbstoffe und Träger letztlich in der Umwelt verbleiben, müssen sie des Weiteren einer möglichst niedrigen Wassergefährdungsklasse angehören.

Doch nicht genug: Die Pulver müssen natürlich auch den Anforderungen des Verbrauchers genügen. Dazu gehört vor allem, dass sie beim in die Luft werfen zwar hoch, aber nicht weit fliegen. Pulver, die zu leicht sind, werden vom Wind mitgetragen und gehen dann nicht wie gewünscht auf den Feiernden herunter, sondern schlagen sich außerhalb des Festivalgeländes auf Passanten, Fahrzeugen und der Wäsche der Nachbarn nieder. Der damit verbundene Ärger ist leicht vorstellbar. Werden die Pulver jedoch zu schwer, bleiben sie nicht lange in der Schwebe, sondern fallen unweit von der Wurfstelle wieder zu Boden, wobei sie ein Gefühl hervorrufen, als würde es Reis regnen. Auch das ist absolut erwünscht.

Bisher im Markt befindliche Produkte - die teilweise direkt aus Indien importiert werden - stellen wasserfreie Mischungen aus Magnesiumstearat oder ähnlichen wasserunlöslichen Trägern sowie verlackten oder auf Harzen aufgezogenen Farbstoffen dar, die den eingangs beschriebenen gesetzlichen Anforderungen nicht entsprechen und an sich gar nicht erst in Verkehr gebracht werden dürften. Alternativen stellen Trockenmischungen auf Basis von Farbstoffen dar, die auf Maisstärke oder Reispulver aufgebracht sind. Hier kommt es zu den geschilderten Nachteilen beim Flug- und Wurfverhalten.

Die Aufgabe der vorliegenden Erfindung hat somit darin bestanden, das eingangs geschilderte komplexe Anforderungsprofil sowohl hinsichtlich gesetzlicher Bestimmungen als bezüglich der Anwendung voll umfänglich zu erfüllen. Die Zubereitungen sollen insbesondere toxikologisch und dermatologisch unbedenklich, explosionssicher und nicht wassergefährdend sein und ein Wurf- und Flugverhalten aufweisen, das man kurz mit "hoch, aber nicht weit" beschreiben kann.

### BESCHREIBUNG DER ERFINDUNG

Gegenstand der Erfindung sind feste Farbstoffzubereitungen, enthaltend
(a) Stärke,
(b) Kieselsäure mit einer Teilchengröße d50 (Coulter LS 230) im Bereich von 10 bis 80 µm,
(c) Kieselsäure mit einer Teilchengröße d50 (Coulter LS 230) im Bereich von 80 bis 140 µm,
(d) Natriumchlorid,
(e) Farbstoffe sowie
(f) Duft- und/oder Geschmacksstoffe,
mit der Maßgabe, dass sie mindestens 15 Gew.-% Wasser aufweisen.

Überraschenderweise wurde gefunden, dass Farbstoffzubereitungen der beanspruchten Art das eingangs geschilderte komplexe Anforderungsprofil in vollem Umfang erfüllen. Die Zubereitungen sind toxikologisch und dermatologisch unbedenklich und weisen keine Tendenz zu Staubexplosionen auf. Zudem gehören Sie der niedrigsten Wassergefährdungsklasse 1 an und sind sogar entsprechend geltendem Lebensmittelrecht für den Verzehr geeignet, was die besondere Sicherheit der Produkte noch einmal unterstreicht.

Insbesondere erfüllen Sie aber auch die hohen Anforderungen an das Flug- und Wurfverhalten, d.h. sie sind schwer genug, um nicht vom weg getragen zu werden, aber leicht genug, um hoch in die Luft geworfen werden zu können. Dazu weisen sie eine Feinteiligkeit auf, die beim abregnen auf die Körperoberfläche als nicht unangenehm empfunden wird.

Vorzugsweise weisen die Zubereitungen einen mittleren Teilchendurchmesser (nach Siebanalyse) im Bereich von etwa 50 bis etwa 100 µm und insbesondere etwa 60 bis etwa 75 µm auf. Auf diese Weise wird ein optimales Flug- und Wurfverhalten erreicht.

Als organische Träger (Komponente a) haben sich organische Stärken als besonders geeignet. Hierzu zählen vor allem Mais- und Reisstärke, aber grundsätzlich können auch andere pflanzlichen Stärken eingesetzt werden, wie beispielsweise Kartoffelstärke. Ebenfalls geeignet sind hochstärkehaltige Produkte, wie beispielsweise gemahlenes Reispulver.

Für die anwendungstechnischen Eigenschaften der Zubereitungen ist es ferner entscheidend, dass zwei unterschiedliche Qualitäten an Kieselsäure, speziell an Fällungskieselsäure, enthalten sind, die sich durch ihre mittlere Partikelgröße (d50) unterscheiden. Die Kieselsäure wirkt für das in der in der Formulierung enthaltene Wasser als Bindemittel. Es hat sich überraschend erwiesen, dass nur bei der Anwesenheit von im Durchschnitt sehr kleinen und sehr großen Kieselsäureteilchen ein optimales Flug- und Wurfverhalten erzielt wird, da die Wasserbindung für das Gewicht der Teilchen sehr wichtig ist.

Erfindungsgemäß ist auch die Mindestmenge Wasser ein kritischer Faktor. Es müssen mindestens 15, vorzugsweise etwa 20 bis 25 Gew.-% vorhanden und von der Kieselsäure physikalisch gebunden vorhanden sein, um die Gefahr einer Staubexplosion nicht nur zu minimieren, sondern tatsächlich auszuschließen.

Hierzu werden vorzugsweise zum einen Kieselsäurequalitäten als Komponente (b) eingesetzt, die eine Teilchengröße d50 (Coulter LS 230) im Bereich von etwa 10 bis etwa 14 µm und insbesondere 12 µm aufweisen. Als Komponente (c) kommen vorzugsweise Kieselsäure zum Einsatz, die eine Teilchengröße d50 (Coulter LS 230) im Bereich von etwa 100 bis etwa 140 µm und insbesondere von etwa 120 µm aufweisen. Solche Stoffe sind beispielsweise unter den Handelsnamen Sipernat^{®} 22 und Sipernat 22S (Evonik) im Handel erhältlich.

Auch die Menge an Natriumchlorid dient vor allem dem Explosionsschutz, jedoch auch als Mischhilfe.

Die Zubereitungen enthalten naturgemäß Farbstoffe und deren Lacke, bei denen es sich vorzugsweise um Lebensmittelfarbstoffe handeln sollte, da diese unbedingt toxikologisch und dermatologisch unbedenklich sind. Die zugelassenen Lebensmittelfarbstoffe reichen von E 129 bis E 161. Es sind dies:

| **Farbstoff** | **E-Nummer** | **Farbe** |
|---|---|---|
| Allurarot AC | E 129 | rot |
| Aluminium | E 173 | |
| Amaranth | E 123 | rot |
| Anthocyane | E 163 | violett, blau |
| Azorubin | E 122 | rot |
| Betanin | E 162 | rot |
| Braun FK | E 154 | gelb-braun |
| Braun HT | E 155 | rot-braun |
| Brillantblau FCF | E 133 | blau |
| Brillantschwarz BN | E 151 | violett, braun, schwarz |
| Calciumcarbonat | E 170 | |
| Canthaxanthin | E 161 g | |
| Carotin | E 160 a | |
| * Annatto *(Norbixin)* | E 160 b | |
| * Capsanthin | E 160 c | |
| * Lycopin | E 160 d | |
| * 8'-Apo-β-caroten-8'-al | E 160 e | |
| * Ethyl-8'-apo-β-caroten-8'-oat | E 160 f | |
| Chinolingelb | E 104 | |
| Chlorophyll | E 140 | grün |
| Cochenillerot A | E 124 | |
| Curcumin | E 100 | |
| Eisenoxid | E 172 | |
| Erythrosin | E 127 | |
| Gelborange S | E 110 | |
| Gold | E 175 | |
| Grün S | E 142 | |
| Indigotin | E 132 | |
| Koschenille | E 120 | |
| Kupferhaltige Komplexe der Chlorophylle und Chlorophylline | E 141 | |
| Lactoflavin | E 101 | |
| Litholrubin BK | E 180 | |
| Lutein | E 161 b | |
| Patentblau V | E 131 | |
| Pflanzenkohle | E 153 | |
| Riboflavin (Vitamin B2) | E 101 | |
| * Riboflavin-5-phosphat | E 101 a | |
| Saflor | | kirschrot bis braungelb |
| Silber | E 174 | |
| Tartrazin | E 102 | |
| Titandioxid | E 171 | |
| Zuckerkulör | E 150 | |
| Zeaxanthin | E 161 h | |

Neben Lebensmittelfarbstoffen kommen jedoch auch solche in Betracht, die zwar nicht in der Liste enthalten, jedoch in den USA von der FDA zugelassen worden sind. Ebenfalls können kosmetische Farbstoffe eingesetzt werden

Besonders bevorzugt sind auch Farbstoffe, die unter Schwarz- oder UV-Licht fluoreszieren.

Die Zubereitungen können auch Duft- und Geschmacksstoffe enthalten. Bevorzugt eingesetzte Duftstoffe bzw. Parfümöle, die in die Mittel inkorporiert werden können, sind keinerlei Beschränkungen unterworfen. So können als Duftstoffe einzelne Riechstoffverbindungen, sowohl synthetische oder natürliche Verbindungen vom Typ der Ester, Ether, Aldehyde, Ketone, Alkohole ,Kohlenwasserstoffe, Säuren, Kohlensäureester, aromatische Kohlenwasserstoffe, aliphatische Kohlenwasserstoffe, gesättigte und/oder ungesättigte Kohlenwasserstoffe und Mischungen daraus verwendet werden. Als Duftaldehyde oder Duftketone können dabei alle üblichen Duftaldehyde und Duftketone eingesetzt werden, die typischerweise zur Herbeiführung eines angenehmen Duftempfindens eingesetzt werden. Geeignete Duftaldehyde und Duftketone sind dem Fachmann allgemein bekannt. Die Duftketone können alle Ketone umfassen, die einen erwünschtem Duft oder ein Frischeempfinden verleihen können. Es können auch Gemische unterschiedlicher Ketone eingesetzt werden. Beispielsweise kann das Keton ausgewählt sein aus der Gruppe, bestehend aus Buccoxim, Iso jasmon, Methyl beta naphthyl keton, Moschus indanon, Tonalid/Moschus plus, Alpha-Damascon, Beta-Damascon, Delta-Damascon,lso-Damascon, Damascenon, Damarose, Methyl-dihydrojasmonat, Menthon, Carvon, Campher, Fenchon, Alphalonen, Beta-Ionon, Dihydro-Beta-Ionon, Gamma-Methyl so genanntes Ionon, Fleuramon, Dihydrojasmon, Cis-Jasmon, Iso-E-Super, Methyl-cedrenyl-keton oder Methyl-cedrylon,Acetophenon, Methylacetophenon, Para-Methoxy-acetophenon, Methyl-beta-naphtyl-keton,Benzyl-aceton, Benzophenon, Para-Hydroxy-phenyl-butanon, Celery Keton oder Livescon,6-Isopropyldecahydro-2-naphton, Dimethyl-octenon, Freskomenth, 4-(I-Ethoxyvinyl)-3,3,5,5,-tetramethyl-cyclohexanon,Methyl-heptenon, 2-(2-(4-Methyl-3-cyclohexen-1-yl)propyl)-cyclopentanon, 1-(p-Menthen-6(2)-yl)-1-propanon,4-(4-Hydroxy-3-methoxyphenyl)-2-butanon, 2-Acetyl-3,3-dimethyl-norbornan, 6,7-Dihydro-1,1,2,3,3-pentamethyl-4(5H)-indanon,4-Damascol, Dulcinyl or Cassion, Gelson, Hexalon, Isocyclemon E, Methylcyclocitron, Methyl-Lavendel-keton, Orivon, Para-tert-butyl-cyclohexanon, Verdon, Delphon, Muscon, Neobutenon, Plicaton, Velouton, 2,4,4,7-Tetramethyl-oct-6-en-3-on, Tetrameran, Hedionund Gemischen davon. Bevorzugt können die Ketone ausgewählt sein aus AlphaDamascon, Delta Damascon, Iso Damascon, Carvon, Gamma-Methyl-ionon, Iso-E-Super,2,4,4,7-Tetramethyl-oct-6-en-3-on, Benzylaceton, Beta Damascon, Damascenon, Methyldihydrojasmonat, Methyl-cedrylon, Hedion und Gemischen davon.

Geeignete Duftaldehyde können beliebige Aldehyde sein, die entsprechend der Duftketone einen gewünschten Duft oder eine Frischeempfinden vermitteln. Es kann sich wiederum um einzelne Aldehyde oder Aldehydgemische handeln. Geeignete Aldehyde sind beispielsweise Melonal, Triplal, Ligustral, Adoxal, Anisaldehyd, Cymal,Ethylvanillin, Florhydral, Floralozon, Helional, Heliotropin, Hydroxycitronellal, Koavon, Laurinaldehyd, Canthoxal, Lyral, Lilial, Adoxal, Anisaldehyd, Cumal Methyl-nonyl-acetaldehyd, Citronellal, Citronellyloxy-acetaldehyd, Cyclamenaldehyd, Bourgeonal, p,t-Bucinal, Phenylacetaldehyd, Undecylenaldehyd, Vanillin; 2,6,10-Trimethyl-9-undecenal, 3-Dodecen-I-al,alpha-n-Amylzimtaldehyd, 4-Methoxybenzaldehyd, Benzaldehyd, 3-(4-tert-Butylphenyl)-propanal,2-Methyl-3-(para-methoxyphenylpropanal), 2-Methyl-4-(2,6,6-trimethyl-2(1)-cyclohexen-1-yl)butanal,3-Phenyl-2-propenal, cis-/trans-3,7-Dimethyl-2,6-octadien-I-al, 3,7-Dimethyl-6-octen-I-al,[(3,7-Dimethyl-6-octenyl)oxy]acetaldehyd, 4-Isopropylbenzyaldehyd, 1,2,3,4,5,6,7,8-octahydro-8,8-Dimethyl-2-naphthaldehyd,2,4-Dimethyl-3-cyclohexen-1-carboxyaldehyd, 2-Methyl-3-(isopropylphenyl)propanal, Decyl aldehyd, 2,6-Dimethyl-5-heptenal; 4-(tricyclo[5.2. 1.0 (2,6)]-decylidene-8)-butanal;Octahydro-4,7-methano-IH-indenecarboxaldehyd; 3-Ethoxy-4-hydroxybenzaldehyd, para-Ethyl-alpha,alpha-dimethylhydrozimtaldehyd, alpha-Methyl-3,4-(methylenedioxy)-hydrozimtaldehyd,3,4-Methylenedioxybenzaldehyd, alpha-n-Hexylzimtaldehyd, m-Cymene-7-carboxaldehyd,alpha-Methylphenylacetaldehyd, 7-Hydroxy-3,7-dimethyl octanal, Undecenal, 2,4,6-Trimethyl-3-cyclohexene-I-carboxaldehyd,4-(3)(4-Methyl-3-pentenyl)-3-cyclohexen-carboxaldehyd, 1-Dodecanal, 2,4-Dimethylcyclohexene-3-carboxaldehyd,4-(4-Hydroxy-4-methyl pentyl)-3-cylohexene-I-carboxaldehyd, 7-Methoxy-3,7-dimethyloctan-1-al,2-Methyl undecanal, 2-Methyl decanal, 1-nonanal, 1-Octanal, 2,6,10-Trimethyl-5,9-undecadienal,2-Methyl-3-(4-tertbutyl)propanal, 3-(4-Ethylphenyl)-2,2-Dimethylpropanal, 3-(4-Methoxyphenyl)-2-methylpropanal,Methylnonylacetaldehyd, 2-Phenylpropan-1-al, 3-Phenylprop-2-en-1-al, 3-Phenyl-2-pentylprop-2-en-1-a1,3-Phenyl-2-hexylprop-2-enal, 3-(4-Isopropylphenyl)-2-methylpropan-1-al, 3-(4-Ethylphenyl)-2,2-dimethylpropan-1-a1,3-(4-tert-Butylphenyl)-2-methyl-propanal, 3-(3,4-Methylendioxy-phenyl)-2-methylpropan-1-al,3-(4-Ethylphenyl)-2,2-dimethylpropanal, 3-(3-Isopropylphenyl)-butan-1-al, 2,6-Dimethylhept-5-en-1-al,Dihydrozimtaldehyd, 1-methyl-4-(4-methyl-3-pentenyl)-3-cyclohexene-1-carboxaldehyd,5 oder 6 Methoxyhexahydro-4,7-methanoindan-1 oder 2-carboxyaldehyd, 3,7-Dimethyloctan-1-al,1-Undecanal,10-Undecen-1-al, 4-Hydroxy-3-methoxybenzaldehyd, 1-Methyl-3-(4-methylpentyl)-3-cyclohexene-carboxyaldehyd,7-Hydroxy-3,7-dimethyl-octanal; trans-4-decenal, 2,6-Nonadienal, para-Tolylacetaldehyd;4-Methylphenylacetaldehyd, 2-Methyl-4-(2,6,6-trimethyl-1-cyclohexen-1-yl)-2-butenal,ortho-Methoxyzimtaldehyd, 3,5,6-Trimethyl-3-cyclohexenecarboxaldehyd, 3,7-Dimethyl-2-methylene-6-octenal,Phenoxyacetaldehyd; 5,9-Dimethyl-4,8-decadienal, Peony aldehyd (6,10-dimethyl-3-oxa-5,9-undecadien-1-al),Hexahydro-4,7-methanoindan-1-carboxaldehyd, Octanal, 2-Methyl octanal, alpha-Methyl-4-(1-methylethyl)benzeneacetaldehyd,6,6-Dimethyl-2-norpinene-2-propionaldehyd, para Methyl phenoxy acetaldehyd, 2-methyl-3-phenyl-2-propen-1-al,3,5,5-Trimethylhexanal, Hexahydro-8,8-dimethyl-2-naphthaldehyd, 3-Propyl-bicyclo[2.2.1]-hept-5-ene-2-carbaldehyd,9-Decenal, 3-Methyl-5-phenyl-1-pentanal, Methylnonyl acetaldehyd, 1-p-Menthene-q-carboxaldehyd,Citral oder Gemische davon, Lilial citral, 1-Decanal, n-Undecanal, n-Dodecanal, Florhydral, 2,4-Dimethyl-3-cyclohexen-1-carboxaldehyd 4-Methoxybenzaldehyde, 3-Methoxy-4-hydroxybenzaldehyde,3-Ethoxy-4-hydroxybenzaldehyde, 3,4-Methylendioxybenzaldehyd und 3,4-Dimethoxybenzaldehydund Gemische davon. Wie vorstehend beispielhaft ausgeführt, können die Duftaldehyde und Duftketone eine aliphatische, cycloaliphatische, aromatische, ethylenisch ungesättigte Struktur oder eine Kombination dieser Strukturen aufweisen. Es können fernerweitere Heteroatome oder polycyclische Strukturen vorliegen. Die Strukturen können geeignete Substituenten wie Hydroxyl- oder Aminogruppen aufweisen. Für weitere geeignete Duftstoffe, ausgewählt aus Aldehyden und Ketonen, wird auf Steffen Arctander "Published 1960 and 1969 respectively, Reprinted2000 ISBN: Aroma Chemicals Vol. 1: 0-931710-37-5, Aroma Chemicals Vol. 2: 0-931710-38-3", verwiesen.

Geeignete Riechstoffverbindungen vom Typ der Ester sind beispielsweise Benzylacetat, Phenoxyethylisobutyrat, p-tert.-Butylcyclohexylacetat, Linalylacetat, Dimethylbenzylcarbinylacetat (DMBCA), Phenylethylacetat, Benzylacetat, Ethylmethylphenylglycinat, Allylcyclohexylpropionat, Styrallylpropionat, Benzylsalicylat, Cyclohexylsalicylat, Floramat, Melusat und Jasmacyclat. Riechstoffverbindungen vom Typ der Kohlenwasserstoffen sind z.B. Terpene wie Limonen und Pinen. Geeignete Duftstoffe vom Typ Ether sind beispielsweise Benzylethylether und Ambroxan. Geeignete Duftstoffalkohole sind beispielsweise 10-Undecen-1-ol, 2,6-Dimethylheptan-2-ol, 2-Methylbutanol, 2-Methylpentanol,2-Phenoxyethanol, 2-Phenylpropanol, 2-tert-Butycyclohexanol, 3,5,5-Trimethylcyclohexanol,3-Hexanol, 3-Methyl-5-phenylpentanol, 3-Octanol, 1-Octen-3-ol, 3-Phenylpropanol,4-Heptenol, 4-Isopropylcyclohexanol, 4-tert-Butycyclohexanol, 6,8-Dimethyl-2-nonanol,6-Nonen-1-ol, 9-Decen-1-ol, alpha-Methylbenzylalkohol, alpha-Terpineol, Amylsalicylat,Benzylalkohol, Benzylsalicylat, beta-Terpineol, Butylsalicylat,Citronellol, Cyclohexylsalicylat, Decanol, Dihydromyrcenol, Dimethylbenzylcarbinol,Dimethylheptanol, Dimethyloctanol, Ethylsalicylat, Ethylvanilin, Anethol, Eugenol,Geraniol, Heptanol, Hexylsalicylat, Isoborneol, Isoeugenol, Isopulegol, Linalool,Menthol, Myrtenol, n-Hexanol, Nerol, Nonanol, Octanol, para-Menthan-7-ol, Phenylethylalkohol,Phenol, Phenylsalicylat, Tetrahydrogeraniol, Tetrahydrolinalool, Thymol, trans-2-cis-6-Nonadienol,trans-2-Nonen-1-ol, trans-2-Octenol, Undecanol, Vanillin, Zimtalkohol, wobei, wenn mehrere Duftstoffalkohole vorhanden sind, diese unabhängig voneinander ausgewählt sein können.

Duftstoffe bzw. Parfümöle können auch natürliche Riechstoffgemische sein, wie sie aus pflanzlichen Quellen zugänglich sind, z.B. Pine-, Citrus-, Jasmin-, Patchouly-, Rosen- oder Ylang-Ylang-öl. Ebenfallsgeeignet sind Muskateller-Salbeiöl, Kamillenöl, Nelkenöl, Melissenöl,Minzöl, Zimtblaetteröl, Lindenbluetenöl, Wacholderbeeröl, Vetiveröl, Olibanumöl, Galbanumöl und Labdanumöl sowie Orangenblütenöl, Neroliöl, Orangenschalenöl und Sandelholzöl. Ätherischen Öle wie Angelikawurzelöl, Anisöl, Arnikablütenöl, Basilikumöl, Bayöl, Champacablütenöl, Edeltannenöl, Edeltannenzapfenöl, Elemiöl, Eukalyptusöl, Fenchelöl, Fichtennadelöl, Galbanumöl, Geraniumöl, Gingergrasöl, Guajakholzöl, Gurjunbalsamöl, Helichrysumöl, Ho-öl, Ingweröl, Irisöl, Kajeputöl, Kalmusöl, Kamillenöl, Kampferöl, Kanagaöl, Kardamomenöl, Kassiaöl, Kiefernnadelöl, Kopaivabalsamöl, Korianderöl, Krauseminzeöl, Kümmelöl, Kuminöl, Lavendelöl, Lemongrasöl, Limette-öl, Mandarinenoel, Melissenöl, Moschuskerneröl, Myrrhenöl, Nelkenöl, Neroliöl, Niaouliöl, Olibanumöl, Origanumöl, Palmarosaöl, Patchuliöl,Perubalsamöl, Petitgrainöl, Pfefferöl, Pfefferminzöl, Pimentöl, Pine-öl, Rosenöl, Rosmarinöl, Sandelholzöl, Sellerieöl, Spiköl, Sternanisöl, Terpentinöl, Thujaöl, Thymianöl, Verbenaöl, Vetiveröl, Wacholderbeeröl, Wermutöl, Wintergrünöl, Ylang-Ylang-öl, Ysop-öl, Zimtöl, Zimtblätteröl, Zitronellöl, Zitronenöl sowie Zypressenöl.

Die erfindungsgemäßen Zubereitungen können einen oder mehrere Geschmacksstoffe enthalten. Typische Beispiele umfassen: Acetophenon, Allylcapronat, alpha-lonon, beta-lonon, Anisaldehyd, Anisylacetat, Anisylformiat, Benzaldehyd, Benzothiazol, Benzylacetat, Benzylalkohol, Benzylbenzoat, beta-lonon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamyfester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-lsobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Die Zubereitungen erhalten die Komponenten vorzugsweise in folgenden Mengen:
(a) etwa 20 bis etwa 60, vorzugsweise etwa 30 bis etwa 50 Gew.-% Stärke,
(b) etwa 5 bis etwa 20, vorzugsweise etwa 8 bis etwa 15 Gew.-% Kieselsäure mit einer Teilchengröße d50 (Coulter LS 230) im Bereich von etwa 10 bis etwa 80 µm
(c) etwa 10 bis etwa 40, vorzugsweise etwa 8 bis etwa 15 Gew.-% Kieselsäure mit einer Teilchengröße d50 (Coulter LS 230) im Bereich von etwa 80 bis etwa 140 µm
(d) etwa 10 bis etwa 25, vorzugsweise etwa 12 bis etwa 20 Gew.-% Natriumchlorid,
(f) etwa 0,1 bis etwa 10, vorzugsweise etwa 1 bis etwa 8 Gew.-% Farbstoffe und
(g) 0 bis etwa 10, vorzugsweise etwa 0,1 bis etwa 8 Gew.-% Duft- und/oder Geschmacksstoffe
mit der Maßgabe enthalten, dass sich die Mengenangaben mit mindestens 15 Gew.-% Wasser zu 100 Gew.-% ergänzen.

### GEWERBLICHE ANWENDBARKEIT

Ein weiterer Gegenstand der Erfindung betrifft die Verwendung von festen Zubereitungen, enthaltend
(a) Stärke,
(b) Kieselsäure mit einer Teilchengröße d50 (Coulter LS 230) im Bereich von 10 bis 80 µm,
(c) Kieselsäure mit einer Teilchengröße d50 (Coulter LS 230) im Bereich von 80 bis 140 µm,
(d) Natriumchlorid,
(e) Farbstoffe sowie gegebenenfalls
(f) Duft- und/oder Geschmacksstoffe,
mit der Maßgabe, dass sie mindestens 15 Gew.-% Wasser aufweisen, als Farbpulver, speziell als so genannte "Holi-Farben" sowie als Lebensmittelzubereitung oder kosmetische Zubereitung.

Zwei weitere Gegenstände der Erfindung betreffen zum einen die Verwendung einer ersten Mischung enthaltend,
(i) Kieselsäure mit einer Teilchengröße d50 (Coulter LS 230) im Bereich von 10 bis 80 µm und
(ii) Kieselsäure mit einer Teilchengröße d50 (Coulter LS 230) im Bereich von 80 bis 140 µm,
und zum anderen einer zweiten Mischung enthaltend
(i) Stärke,
(ii) Kieselsäure mit einer Teilchengröße d50 (Coulter LS 230) im Bereich von 10 bis 80 µm und
(iii) Kieselsäure mit einer Teilchengröße d50 (Coulter LS 230) im Bereich von 80 bis 140 µm,
zur Herstellung einer festen Farbstoffzubereitung, speziell zum Einsatz bei so genannten Holi-Festivals.

### BEISPIELE

### Herstellbeispiele 1 bis 5

In einem Lödige-Mischer wurden Maistärke, die beiden Kieselsäure-Qualitäten sowie Natriumchlorid nacheinander eindosiert und 2 Minuten miteinander vermischt. Anschließend wurde eine wässrige Farbstofflösung mit einem Druck von 4 bar eingedüst und die Zubereitung weitere 6 Minuten gemischt. Trotz des hohen Wasseranteils wurden trockene Pulver erhalten, die ohne weitere Maßnahmen direkt abgefüllt werden konnten. Die Zusammensetzung der Pulver ist in **Tabelle 1** wiedergegeben:

**Tabelle 1**

| Zusammensetzung HOLI-Pulver | | | | | |
|---|---|---|---|---|---|
| **Komponente** | **1** | **2** | **3** | **4** | **5** |
| Maisstärke | 400,00 | 400,00 | 400,00 | 400,00 | 400,00 |
| Kieselsäure (Sipernat^{®} 23 S) | 100,00 | 100,00 | 150,00 | 50,00 | 100,00 |
| Kieselsäure (Sipernat^{®} 23) | 100,00 | 100,00 | 50,00 | 150,00 | 100,00 |
| Natriumchlorid | 192,00 | 192,00 | 192,00 | 192,00 | 192,00 |
| Brilliantblau C.I. 42090 | 2,00 | - | - | - | - |
| Erythrosin C.I. 45430 | 6,00 | - | - | 5,00 | - |
| Patentblau C.I. 42051 | - | 8,00 | 0,67 | - | - |
| Tartrazin C.I. 19140 | - | - | 5,12 | - | 8,00 |
| Aromastoff | 2,00 | 2,00 | 2,00 | 2,00 | 2,00 |
| Wasser | Ad 100,00 | | | | |
| ***Farbe*** | ***Lila*** | ***Blau*** | ***Grün*** | ***Pink*** | ***Gelb*** |

### Bestimmung der sicherheitstechnischen Kenngrößen

Die Korngrößenverteilung einer Probe von Beispiel 5 wurde mittels Siebanalyse nah DIN 66165 Teil 1 und 2 bestimmt. Dabei wird eine definierte Menge des zu untersuchenden Gutes durch ein oder mehrere Siebe in Fraktionen getrennt und deren Massenanteile ermittelt. Die Ergebnisse sind in Tabelle 2 dargestellt.

Anschließend wurde die Explosionsfähigkeit untersucht. Diese wurde in einer 20-I-Apparatur nach VDI 2263-1 und DIN EN 14034-1+2 durchgeführt. Bei diesem Prüfverfahren werden verschiedene Staubkonzentrationen in einer 20-I-Kugel aufgewirbelt und einem Zünder von 2 kJ ausgesetzt. Wird ein Überdruck von 0,2 bar erreicht oder überschritten, so ist die Substanz als staubexplosionsfähig einzustufen. Die Ergebnisse sind in Tabelle 3 dargestellt. Den Untersuchungsergebnissen nach ist die Substanz als nicht-staubexplosionsfähig einzustufen.

**Tabelle 2**

| Siebanalyse | |
|---|---|
| **Einwaage** | 20,27 g |
| **Amplitude** | 80 |
| **Siebdauer** | 90 min |
| **Medianwert** | 36 µm |
| **Mittlerer Partikeldurchmesser** | 66 µm |

**Tabelle 3**

| Staubexplosionsuntersuchung | |
|---|---|
| **Konzentration [g/m³]** | **Überdruck [bar]** |
| 250 | 0.0 |
| 500 | 0.0 |
| 750 | 0.0 |
| 1.000 | 0.0 |
| 1.250 | 0.0 |
| 1.500 | 0.0 |
| 1.750 | 0.0 |
| 2.000 | 0.0 |

## Patentansprüche

1. Feste Farbstoffzubereitungen, enthaltend
(a) Stärke,
(b) Kieselsäure mit einer Teilchengröße d50 (Coulter LS 230) im Bereich von 10 bis 80 µm,
(c) Kieselsäure mit einer Teilchengröße d50 (Coulter LS 230) im Bereich von 80 bis 140 µm,
(d) Natriumchlorid,
(e) Farbstoffe sowie
(f) Duft- und/oder Geschmacksstoffe,
mit der Maßgabe, dass sie mindestens 15 Gew.-% Wasser aufweisen.

2. Zubereitungen nach Anspruch 1, **dadurch gekennzeichnet, dass** sie einen mittleren Teilchendurchmesser im Bereich von 50 bis 100 µm aufweisen.

3. Zubereitungen nach Anspruch 2, **dadurch gekennzeichnet, dass** sie einen mittleren Teilchendurchmesser im Bereich von 60 bis 75 µm aufweisen.

4. Zubereitungen nach mindestens einem der Ansprüche 1 bis 3, **dadurch gekennzeichnet, dass** sie als Komponente (a) Maisstärke, Reisstärke oder gemahlenes Reispulver enthalten.

5. Zubereitungen nach mindestens einem der Ansprüche 1 bis 4, **dadurch gekennzeichnet, dass** sie als Komponente (b) Kieselsäure mit einer Teilchengröße d50 (Coulter LS 230) im Bereich von 10 bis 14 µm enthalten.

6. Zubereitungen nach mindestens einem der Ansprüche 1 bis 5, **dadurch gekennzeichnet, dass** sie als Komponente (c) Kieselsäure mit einer Teilchengröße d50 (Coulter LS 230) im Bereich von 100 bis 140 µm enthalten.

7. Zubereitungen nach mindestens einem der Ansprüche 1 bis 6, **dadurch gekennzeichnet, dass** sie als Komponente (e) Lebensmittelfarbstoffe enthalten.

8. Zubereitungen nach mindestens einem der Ansprüche 1 bis 7, **dadurch gekennzeichnet, dass** sie
(a) 20 bis 60 Gew.-% Stärke,
(b) 5 bis 20 Gew.-% Kieselsäure mit einer Teilchengröße d50 (Coulter LS 230) im Bereich von 10 bis 80 µm
(c) 10 bis 40 Gew.-% Kieselsäure mit einer Teilchengröße d50 (Coulter LS 230) im Bereich von 80 bis 140 µm
(d) 10 bis 25 Gew.-% Natriumchlorid,
(f) 0,1 bis 10 Gew.-% Farbstoffe und
(g) 0 bis 10 Gew.-% Duft- und/oder Geschmacksstoffe
mit der Maßgabe enthalten, dass sich die Mengenangaben mit mindestens 15 Gew.-% Wasser zu 100 Gew.-% ergänzen.

9. Zubereitungen nach Anspruch 8, **dadurch gekennzeichnet, dass** sie
(a) 30 bis 50 Gew.-% Stärke,
(b) 8 bis 15 Gew.-% Kieselsäure mit einer Teilchengröße d50 (Coulter LS 230) im Bereich von 10 bis 80 µm
(c) 8 bis 15 Gew.-% Kieselsäure mit einer Teilchengröße d50 (Coulter LS 230) im Bereich von 80 bis 140 µm
(d) 12 bis 20 Gew.-% Natriumchlorid,
(f) 1 bis 8 Gew.-% Farbstoffe und
(g) 0,1 bis 8 Gew.-% Duft- und/oder Geschmacksstoffe
mit der Maßgabe enthalten, dass sich die Mengenangaben mit mindestens 15 Gew.-% Wasser zu 100 Gew.-% ergänzen.

10. Verwendung von festen Zubereitungen, enthaltend
(a) Stärke,
(b) Kieselsäure mit einer Teilchengröße d50 (Coulter LS 230) im Bereich von 10 bis 80 µm,
(c) Kieselsäure mit einer Teilchengröße d50 (Coulter LS 230) im Bereich von 80 bis 140 µm,
(d) Natriumchlorid,
(e) Farbstoffe sowie gegebenenfalls
(f) Duft- und/oder Geschmacksstoffe,
mit der Maßgabe, dass sie mindestens 15 Gew.-% Wasser aufweisen, als Farbpulver, Lebensmittelzubereitung oder kosmetische Zubereitung.

11. Verwendung einer Mischung enthaltend,
(i) Kieselsäure mit einer Teilchengröße d50 (Coulter LS 230) im Bereich von 10 bis 80 µm und
(ii) Kieselsäure mit einer Teilchengröße d50 (Coulter LS 230) im Bereich von 80 bis 140 µm,
zur Herstellung einer festen Farbstoffzubereitung.

12. Verwendung einer Mischung enthaltend,
(i) Stärke,
(ii) Kieselsäure mit einer Teilchengröße d50 (Coulter LS 230) im Bereich von 10 bis 80 µm und
(iii) Kieselsäure mit einer Teilchengröße d50 (Coulter LS 230) im Bereich von 80 bis 140 µm,
zur Herstellung einer festen Farbstoffzubereitung.

## Claims

1. Solid dye preparations, comprising
(a) starch,
(b) silica having a D50 particle size (Coulter LS 230) in the range of 10 to 80 µm,
(c) silica having a D50 particle size (Coulter LS 230) in the range of 80 to 140 µm,
(d) sodium chloride,
(e) dyes, and if applicable,
(f) fragrances and/or flavourings,
with the proviso that they contain at least 15% by weight of water.

2. Preparations according to Claim 1, **characterized by** having a mean particle size in the range of 50 to 100 µm.

3. Preparations according to Claim 2, **characterized by** having a mean particle size in the range of 60 to 75 µm.

4. Preparations according to at least one of Claims 1 to 3, **characterized by** comprising corn starch, rice starch, or milled rice powder as component (a).

5. Preparations according to at least one of Claims 1 to 4, **characterized by** comprising silica having a D50 particle size (Coulter LS 230) in the range of 10 to 14 µm as component (b).

6. Preparations according to at least one of Claims 1 to 5, **characterized by** comprising silica having a D50 particle size (Coulter LS 230) in the range of 100 to 140 µm as component (c).

7. Preparations according to at least one of Claims 1 to 6, **characterized by** comprising food colourings as component (e).

8. Preparations according to at least one of claims 1 to 7, **characterized by** comprising
(a) 20 to 60% by weight of starch,
(b) 5 to 20% by weight of silica having a D50 particle size (Coulter LS 230) in the range of 10 to 80 µm,
(c) 10 to 40% by weight of silica having a D50 particle size (Coulter LS 230) in the range of 80 to 140 µm,
(d) 10 to 25% by weight of sodium chloride,
(f) 0.1 to 10% by weight of dyes, and
(g) 0 to 10% by weight of fragrances and/or flavourings,
with the proviso that the amounts indicated are to be made up to 100% using at least 15% by weight of water.

9. Preparations according to Claim 8, **characterized by** comprising
(a) 30 to 50% by weight of starch,
(b) 8 to 15% by weight of silica having a D50 particle size (Coulter LS 230) in the range of 10 to 80 µm,
(c) 8 to 15% by weight of silica having a D50 particle size (Coulter LS 230) in the range of 80 to 140 µm,
(d) 12 to 20% by weight of sodium chloride,
(f) 1 to 8% by weight of dyes, and
(g) 0.1 to 8% by weight of fragrances and/or flavourings,
with the proviso that the amounts indicated are to be made up to 100% using at least 15% by weight of water.

10. Use of solid preparations comprising
(a) starch,
(b) silica having a D50 particle size (Coulter LS 230) in the range of 10 to 80 µm,
(c) silica having a D50 particle size (Coulter LS 230) in the range of 80 to 140 µm,
(d) sodium chloride,
(e) dyes, and if applicable,
(f) fragrances and/or flavourings,
with the proviso that they contain at least 15% by weight of water, as a dye powder, food preparation, or cosmetic preparation.

11. Use of a mixture comprising:
(i) silica having a D50 particle size (Coulter LS 230) in the range of 10 to 80 µm,
(ii) silica having a D50 particle size (Coulter LS 230) in the range of 80 to 140 µm,
for use in producing a solid dye preparation.

12. Use of a mixture comprising:
(a) starch,
(b) silica having a D50 particle size (Coulter LS 230) in the range of 10 to 80 µm,
(c) silica having a D50 particle size (Coulter LS 230) in the range of 80 to 140 µm,
for use in producing a solid dye preparation.

## Revendications

1. Préparations colorantes sous forme solide contenant
(a) l'amidon
(b) l'acide silicique ayant une taille de particule de d50 (Coulter LS 230) dans la gamme de 10 à 80 µm,
(c) l'acide silicique ayant une taille de particule de d50 (Coulter LS 230) dans la gamme de 80 à 140 µm,
(d) le chlorure de sodium,
(e) les colorants ainsi que
(f) les parfums et/ou les aromates,
à la condition qu'ils présentent au moins 15 % en poids d'eau.

2. Préparations selon la revendication 1, **caractérisées en ce qu**'elles présentent un diamètre moyen de particule dans la gamme de 50 à 100 µm.

3. Préparations selon la revendication 2, **caractérisées en ce qu**'elles présentent un diamètre moyen de particule dans la gamme de 60 à 75 µm.

4. Préparations selon au moins une des revendications 1 à 3, **caractérisées en ce qu**'elles contiennent (a) l'amidon de maïs, de riz ou poudre de riz finement moulu comme composants.

5. Préparations selon au moins une des revendications 1 à 4, **caractérisées en ce qu**'elles contiennent (b) l'acide silicique ayant une taille de particule de d50 (Coulter LS 230) dans la gamme de 10 à 14 µm.

6. Préparations selon au moins une des revendications 1 à 5, **caractérisées en ce qu**'elles contiennent (c) l'acide silicique ayant une taille de particule de d50 (Coulter LS 230) dans la gamme de 100 à 140 µm.

7. Préparations selon au moins une des revendications 1 à 6, **caractérisées en ce qu**'elles contiennent (e) les colorants alimentaires comme composant.

8. Préparations selon au moins une des revendications 1 à 7, **caractérisées en ce qu**'elles contiennent
(a) 20 à 60 % en poids d'amidon,
(b) 5 à 20 % en poids d'acide silicique ayant une taille de particule de d50 (Coulter LS 230) dans la gamme de 10 à 80 µm,
(c) 10 à 40 % en poids d'acide silicique ayant une taille de particule de d50 (Coulter LS 230) dans la gamme de 80 à 140 µm,
(d) 10 à 25 % en poids de chlorure de sodium,
(f) 0,1 à 10 % en poids des colorants et
(g) 0 à 10 % en poids des parfums et/ou des aromates de
à la condition que les données de quantité se complètent au moins de 15 % en poids d'eau à 100 % en poids d'eau.

9. Préparations selon la revendication 8, **caractérisées en ce qu**'elles contiennent
(a) 30 à 50 % en poids d'amidon,
(b) 8 à 15 % en poids d'acide silicique ayant une taille de particule de d50 (Coulter LS 230) dans la gamme de 10 à 80 µm,
(c) 8 à 15 % en poids d'acide silicique ayant une taille de particule de d50 (Coulter LS 230) dans la gamme de 80 à 140 µm,
(d) 12 à 20 % en poids de chlorure de sodium,
(f) 1 à 8 % en poids des colorants et
(g) 0,1 à 8 % en poids des parfums et/ou des aromates de
à la condition que les données de quantité se complètent au moins de 15 % en poids d'eau à 100 % en poids d'eau.

10. Utilisation des préparations solides contenant
(a) d'amidon,
(b) d'acide silicique ayant une taille de particule de d50 (Coulter LS 230) dans la gamme de 10 à 80 µm,
(c) d'acide silicique ayant une taille de particule de d50 (Coulter LS 230) dans la gamme de 80 à 140 µm,
(d) du chlorure de sodium,
(e) des colorants ainsi que
(f) des parfums et/ou des aromates,
à la condition qu'ils présentant au moins 15 % en poids d'eau comme poudre de couleur, préparation alimentaire ou cosmétique.

11. Utilisation d'un mélange contenant
(i) d'acide silicique, ayant une taille de particule de d50 (Coulter LS 230) dans la gamme de 10 à 80 µm,
(ii) d'acide silicique, ayant une taille de particule de d50 (Coulter LS 230) dans la gamme de 80 à 140 µm,
pour la production d'une préparation de colorants sous forme solide.

12. Utilisation d'un mélange contenant
(i) d'amidon,
(ii) d'acide silicique ayant une taille de particule de d50 (Coulter LS 230) dans la gamme de 10 à 80 µm,
(iii) d'acide silicique ayant une taille de particule de d50 (Coulter LS 230) dans la gamme de 80 à 140 µm,
pour la production d'une préparation de colorants sous forme solide.
